# EUROPÄISCHE PATENTANMELDUNG

(11) **EP 3 819 845 A1**
(43) Veröffentlichungstag der Anmeldung: **12.05.2021**
(21) Anmeldenummer: 20201249.8
(22) Anmeldetag: 12.10.2020
(51) Int. Cl.: G06Q 10/08

(54) **HAUSHALTSLAGERVORRICHTUNG**

(30) Priorität: 06.11.2019 DE 102019129872
(71) Anmelder: Miele & Cie. KG, 33332 Gütersloh (DE)
(72) Erfinder: Hachmeister, Tim, 32427 Minden (DE); Lörcks, Sebastian, 33335 Gütersloh (DE); Wei, Qian, 33330 Gütersloh (DE); Neumann, Richard, 32805 Hornbad-Meinberg (DE); Randazzo, Danilo, 33613 Bielefeld (DE); Jung, Eugen, 33334 Gütersloh (DE)

(57) **Zusammenfassung**

Die Erfindung betrifft eine Haushaltslagervorrichtung (1) mit einem Nutzraum (12) mit wenigstens einem Lagerungselement (13; 14; 15), vorzugsweise mit einer Mehrzahl von Lagerungselementen (13, 14, 15), welches zur Aufnahme und zur Lagerung wenigstens eines Objekts (3), vorzugsweise wenigstens eines Lebensmittels (3) und/oder wenigstens eines Haushaltsmittels (3), ausgebildet ist, und mit wenigstens einer ersten Bilderfassungseinheit (21), welche ausgebildet und angeordnet ist, den Nutzraum (12) zumindest abschnittsweise optisch zu erfassen. Die Haushaltslagervorrichtung (1) ist gekennzeichnet durch wenigstens eine ToF-Sensoreinheit (22), welche ausgebildet und angeordnet ist, eine flächige Abstandsinformation zu erfassen, wobei die Haushaltslagervorrichtung (1) ausgebildet ist, wenigstens ein Objekt (3) basierend auf den optisch erfassten Bilddaten der Bilderfassungseinheit (21) und auf den flächigen Abstandsinformationen der ToF-Sensoreinheit (22) zu bestimmen.

## Beschreibung

Die Erfindung betrifft eine Haushaltslagervorrichtung nach dem Oberbegriff des Patentanspruchs 1 sowie ein Objekterkennungssystem für eine derartige Haushaltslagervorrichtung gemäß dem Patentanspruch 11.

Seitdem der Mensch Lebensmittel herstellt, welche über seinen aktuellen Bedarf hinausgehen, stellt sich die Frage der Lagerung der Lebensmittel, um diese auch später noch konsumieren zu können. Insbesondere müssen die Lebensmittel haltbar gemacht und in diesem Zustand gelagert werden können. Dies gilt auch für andere Bedarfsgegenstände, welche z.B. trocken, lichtgeschützt und dergleichen zu lagern sein können.

Heutzutage werden Lebensmittel, Haushaltsmittel und dergleichen in privaten Haushalten sowie z.B. in der Gastronomie und in Hotels z.B. in Lagerregalen, in Vorratsregalen und in Küchenschränken sowie in Schubladen und Fächern von Küchenzeilen gelagert. Hier können Lebensmittel gelagert werden, welche entsprechend verpackt und haltbar sind. Lebensmittel wie z.B. Reis, Nudeln und dergleichen können getrocknet und z.B. in Kunststoff oder in Pappe verpackt sein. Andere Lebensmittel können in Gläsern oder als Konservendosen luftdicht verschlossen und in Glas bzw. in Metall verpackt sein. Derartig verpackte Lebensmittel können möglichst kühl aber dennoch bei Raumtemperatur z.B. in einem Vorratsraum bzw. in einer Speisekammer in offenen Lagerregalen oder in mit Türen verschließbaren Vorratsschränken oder Küchenschränken sowie in der Küche in Schubladen und Fächern der Küchenzeile ggf. eng gepackt und ggfs. gestapelt gelagert werden. Dies gilt vergleichbar für Bedarfsgegenstände eines Haushalts wie z.B. Backpapier, Frischhaltefolie, Staubsaugerbeutel, Haushalts- sowie Toilettenpapier und dergleichen, welche üblicherweise in Pappe oder in Kunststofffolie verpackt ebenfalls z.B. an den zuvor beschriebenen Stellen im Vorratsraum bzw. in der Speisekammer, in der Küche aber auch in einem Haushaltsraum zumindest trocken gelagert werden können. Auch können Weinflaschen in einem Weinregal oder in einem Weinklimaschrank bzw. Weintemperierschrank gelagert werden.

Für einige Lebensmittel kann es erforderlich sein, diese gekühlt oder sogar gefroren zu lagern. Hierzu können Kühlgeräte bzw. Gefriergeräte wie z.B. Kühlschränke und Kühltruhen bzw. Gefrierschränke und Gefriertruhen verwendet werden. Diese können in ihrem schließbaren Innenraum, welcher auch als Nutzraum bezeichnet werden kann, die zu kühlenden bzw. zu gefrierenden Lebensmittel aufnehmen und die hierfür erforderliche Temperatur im Innenraum erzeugen. Dies kann für leicht verderbliche Lebensmittel wie z.B. Fleisch- und Wurstwaren, Molkereiprodukte, Fruchtsäfte sowie frisches Obst und Gemüse gelten, welche insbesondere zum zeitnahen Verzehr üblicherweise gekühlt im Haushalt gelagert werden. Kühlschränke sind dabei allgemein in jeder Küche anzutreffen, während Kühltruhen sowie Gefriergeräte nicht unbedingt in jedem Haushalt zu finden sind und dann eher im Vorratsraum, in der Speisekammer, im Keller, in der Garage etc. aufgestellt werden.

Da der Vorrat an Lebensmitteln und bzw. oder Haushaltsmitteln stets im Laufe der Zeit verbraucht wird, ist dieser regelmäßig vom Benutzer wieder aufzufüllen. Der Benutzer sollte daher einen Überblick über die gelagerten Lebensmittel und bzw. oder Haushaltsmittel haben, um deren Vorrat durch Einkaufen rechtzeitig wieder gezielt auffüllen zu können. Hierzu kann der Vorrat vom Benutzer optisch erfasst werden. Die einzukaufenden Waren können dann notiert werden, z.B. klassisch handschriftlich auf einen Einkaufszettel oder auch elektronisch z.B. in einem Smartphone, damit sich der Benutzer diese Informationen nicht merken muss sowie diese Informationen vergessen kann.

Um einem Benutzer z.B. eines Kühlschranks automatisch eine Übersicht über die dort gelagerten Lebensmittel zur Verfügung stellen zu können, ist bekannt, automatisch zu erkennen, welches Lebensmittel vom Benutzer als Person aus dem Innenraum des Kühlschranks als Betriebsvolumen entnommen und in den Innenraum des Kühlschranks eingebracht wird. Diese Information kann dem Benutzer als Inventar des Kühlschranks zur Verfügung gestellt werden, um z.B. den nächsten Einkauf zielgerichtet planen zu können, ohne sich selbst einen Überblick über den aktuellen Inhalt des Kühlschranks verschaffen zu müssen. Auch kann diese Information einem Benutzer während des Einkaufs zur Verfügung gestellt sowie auch fortlaufend aktualisiert werden.

Nachteilig ist hierbei jedoch, dass lediglich Veränderungen des Inventars des Kühlschranks erfasst werden können. Dieses System kann somit nur dann sinnvoll angewendet werden, wenn mit einem leeren Kühlschrank begonnen und dann jede Entnahme sowie Eingabe von Lebensmitteln erkannt wird. Insbesondere können unerkannte bzw. fehlerhaft erkannte Entnahmen sowie Eingaben von Lebensmitteln zu einer fehlerhaften Information über das Inventar des Kühlschranks führen und den Benutzer beim Einkaufen eher fehlleiten als unterstützen. Dieser Nachteil kann sich mit der Zeit bzw. mit der zunehmenden Anzahl von fehlerhaften Informationen verstärken.

Die DE 10 2016 223 754 A1 beschreibt ein Haushaltssystem mit wenigstens einem Haushaltsmöbel und bzw. oder Haushaltsgerät, insbesondere einem Haushaltskältegerät, mit wenigstens einer Identifizierungseinheit, welche zumindest einem innerhalb des Haushaltsmöbels und bzw. oder Haushaltsgeräts angeordneten und bzw. oder anordenbaren Konsumgut zugeordnet und dazu vorgesehen ist, eine individuelle Identifizierungsinformation bereitzustellen, und mit einer Erfassungseinheit, welche dazu vorgesehen ist, die Identifizierungsinformation zu erfassen. Ein Benutzer kann eine individuelle Identifizierungseinheit an einem Lebensmittel anordnen, z.B. wenn er das Lebensmittel gekauft hat und zum ersten Mal in den Kühlschrank stellt. Diese Identifizierungseinheit kann dann diesem Typ von Lebensmittel z.B. mittels eines Smartphones vom Benutzer zugeordnet werden. Mittels einer optischen Erfassung der Identifizierungseinheiten soll das entsprechende Lebensmittel sicherer erkannt und identifiziert werden können als ohne die Identifizierungseinheit. Dies soll die Genauigkeit der automatisierten Inventarerfassung eines Kühlschranks verbessern.

Nachteilig ist hierbei jedoch, dass der Benutzer die Lebensmittel von Hand mit jeweils einer Identifizierungseinheit versehen muss. Die Identifizierungseinheit muss jeweils auch vom Benutzer wieder von Hand entfernt werden, wenn das Lebensmittel verbraucht bzw. dessen Verpackung weggeworfen wird. Gerade nicht verwendete Identifizierungseinheiten müssen vom Benutzer gelagert werden, was zusätzlichen Platz erfordern kann. In jedem Fall stellt die Nutzung des Haushaltssystems der DE 10 2016 223 754 A1 einen nicht unerheblichen Zeitaufwand dar, welcher den Benutzer von der Verwendung des Haushaltssystems der DE 10 2016 223 754 A1 abhalten kann. Dies kann insbesondere bei einem wöchentlichen Großeinkauf für eine mehrköpfige Familie der Fall sein.

Zu beachten ist hierbei, dass der Benutzer das Haushaltssystem der DE 10 2016 223 754 A1 auch durchgängig anwenden muss, um den entsprechenden Nutzen zu erhalten. Wird beispielsweise ein gesamter Einkauf, insbesondere ein wöchentlicher Großeinkauf für eine mehrköpfige Familie, ohne die Verwendung der Identifizierungseinheiten in den Kühlschrank eingeräumt, so kann dies zu einer Ungenauigkeit der automatisch erstellten Inventarliste des Kühlschrankeinhalts führen, welche das Haushaltssystem der DE 10 2016 223 754 A1 für den Benutzer unbrauchbar machen kann.

Auch muss der Benutzer darauf achten, dass er jedem Lebensmitteltyp den entsprechenden Typ von Identifizierungseinheit richtig zuordnet. Werden Identifizierungseinheiten den falschen Lebensmitteltypen zugeordnet, so kann auch dies zu Ungenauigkeiten der automatisch erstellten Inventarliste des Kühlschrankeinhalts führen. Dies kann für einen Benutzer jedoch eine derartige zusätzliche Anstrengung, gerade bei einem wöchentlichen Großeinkauf für eine mehrköpfige Familie, bedeuten, dass das Haushaltssystem der DE 10 2016 223 754 A1 nicht verwendet wird.

Sowohl die vorstehend genannte Übersicht als auch das Haushaltssystem der DE 10 2016 223 754 A1 basieren dabei auf einer optischen Erfassung der Lebensmittel, welche sich z.B. im Innenraum eines Kühlschranks befinden bzw. aus dem Innenraum des Kühlschranks entnommen und in den Innenraum des Kühlschranks eingebracht werden. Somit ist jeweils wenigstens eine Bilderfassungseinheit in Form einer Kamera ein wesentliches Element bei der Erfassung des Inhalts eines Kühlschranks, welche in Kombination mit einer nachgeschalteten Bildverarbeitungseinheit betrieben wird. Üblicherweise werden derartige Bildverarbeitungseinheiten mittels Mikroprozessor und bzw. oder einem FPGA (Field Programmable Gate Array) realisiert.

Die Erfassung der Lebensmittel als Objekte kann dabei statisch wie bei dem Haushaltssystem der DE 10 2016 223 754 A1 erfolgen, bei dem ein Bild oder mehrere Bilder vom Innenraum des Kühlschranks z.B. dann aufgenommen werden, wenn der Benutzer die Tür des Kühlschranks schließt und bzw. oder öffnet U.a. folgende Randbedingungen können die Qualität der Bilderfassung der Lebensmittel und infolge dessen auch die Qualität der Erkennung der Lebensmittel sowie die Erstellung der Bestandsliste bzw. Inventarliste des Kühlschrankeinhalts beeinträchtigen:
- Verdeckung des Objekts, z.B. durch die Hand des Benutzers,
- Bewegungsunschärfe, z.B. resultierend aus den Einflüssen der Geschwindigkeit der Bewegung des Objekts beim Be- bzw. Entladen, aus den Lichtverhältnissen und bzw. oder aus der Verschlusszeit einer Kamera als Bilderfassungseinheit.

Diese Randbedingungen können in vielen Fällen nicht sinnvoll geändert werden, da sie sich insbesondere aus dem Nutzerverhalten wie z.B. aus der Einlagerungs- bzw. Entnahmegeschwindigkeit der Objekte, der Menge der gleichzeitig bei einem Einlagerungsvorgang in den Kühlschrank platzierten Objekte sowie durch Umverpackungen wie z.B. Aufbewahrungsboxen etc. oder als eine Folge des Aufstellortes des Lebensmittels innerhalb des Innenraums des Kühlschranks ergeben. Das natürliche Verhalten des Benutzers, so z.B. der Bewegungsablauf und die Geschwindigkeit beim Beladen, die Positionierung der Objekte im Kühlschrank usw. wird durch die Erfassung der Objekte in der Bewegung nämlich nicht verändert.

Auch kann die Qualität der Bilderfassung durch die Bilderfassungseinheit an Rahmen- und Umweltbedingungen geknüpft sein, welche den Rahmen- und Umweltbedingungen eines Kühlschranks sowie dem Nutzerverhalten widersprechen können. So erfordert ein scharfes Bild eines bewegten Objekts u.a. eine gewisse vorhandene Lichtmenge, welche im Innenraum eines Kühlschranks nicht an jeder Stelle und insbesondere nicht bei Verdeckung eines relevanten Objekts durch andere Objekte und bzw. oder durch die Hand des Benutzers gewährleistet werden kann. Somit kann die Erfassung eines Bildes mit unzureichender Bildqualität daraus resultieren, dass das aufgenommene Bild mangels ausreichender Beleuchtung sowie gleichzeitiger Bewegung des Objekts nicht scharf genug ist, um erfolgreich verarbeitet zu werden. Aufgrund ungeeigneter Beleuchtung kann das erfasste Bild auch einen Farbstich haben, d.h. der Weißabgleich kann nicht korrekt sein, was ebenfalls die Bildverarbeitung negativ beeinflussen kann. Demzufolge können bei der Verwendung einer optischen Bilderfassungseinheit wie z.B. einer Kamera in vielen Fällen die für die Bildverarbeitung relevanten Merkmale eines Objekts wie z.B. dessen Farbe, Form, dominante Logos, Schriftzüge usw. für eine zuverlässige Objekterkennung nicht bestimmt werden, da die Bildqualität nicht ausreichten ist.

Auch kann aufgrund der Bewegung des Objekts durch den Benutzer und die Stelle im Innenraum des Kühlschranks, an dem das Objekt zu platzieren bzw. von wo das Objekt zu entnehmen ist, nicht sichergestellt werden, dass das Objekt von der Bilderfassungseinheit in dessen Bereich der Tiefenschärfe bzw. Schärfentiefe bildlich erfasst werden kann.

Ferner kann die Verwendung einer vergleichsweise kostengünstigen Bilderfassungseinheit und bzw. oder Bildverarbeitungseinheit zu einer vergleichsweise schlechten Qualität des erfassten Bildes bzw. dessen Verarbeitungsergebnisses führen, auch wenn dies die Kosten derartige Systeme reduzieren kann. Spart der Benutzer somit am Preis für die Unterstützung der automatisierten Erstellung einer Inventarliste des Kühlschrankinhalts, kann hieraus ein entsprechend unzureichendes Ergebnis resultieren. Da für einen Benutzer eines Objekterkennungssystems für Lebensmittel die Erkennungsrate der Lebensmittel das entscheidende Kriterium für die Akzeptanz des Systems sein kann, können zur Reduzierung der Kosten vorgenommene Qualitätseinbußen der Bilderfassung und bzw. oder der Bildverarbeitung der Anwendung des Systems bzw. dessen Anschaffung entgegenstehen.

Der Erfindung stellt sich somit das Problem, eine Haushaltslagervorrichtung der eingangs beschriebenen Art bereitzustellen, so dass Objekte zuverlässiger, einfacher, kostengünstiger, schneller, variantenreicher und bzw. oder mit geringerem Aufwand erkannt werden können. Zumindest soll eine Alternative zu bekannten derartigen Haushaltslagervorrichtungen geschaffen werden.

Erfindungsgemäß wird dieses Problem durch eine Haushaltslagervorrichtung mit den Merkmalen des Patentanspruchs 1 sowie durch ein Objekterkennungssystem mit den Merkmalen des Patentanspruchs 11 gelöst. Vorteilhafte Ausgestaltungen und Weiterbildungen der Erfindung ergeben sich aus den nachfolgenden Unteransprüchen.

Somit betrifft die Erfindung eine Haushaltslagervorrichtung mit einem Nutzraum mit wenigstens einem Lagerungselement, vorzugsweise mit einer Mehrzahl von Lagerungselementen, welches zur Aufnahme und zur Lagerung wenigstens eines Objekts, vorzugsweise wenigstens eines Lebensmittels und bzw. oder wenigstens eines Haushaltsmittels, ausgebildet ist. Eine derartige Haushaltslagervorrichtung kann sowohl offen als auch schließbar, z.B. mittels wenigstens einer schwenkbaren oder schiebbaren Tür, einer Klappe oder einem Deckel, ausgebildet sein. Die Haushaltslagervorrichtung kann ein Regal, ein Schrank, eine Küchenzeile und dergleichen sein, wie eingangs beschrieben.

Die Haushaltslagervorrichtung weist auch wenigstens eine Bilderfassungseinheit auf, welche ausgebildet und angeordnet ist, den Nutzraum zumindest abschnittsweise optisch zu erfassen. Die Bilderfassungseinheit kann insbesondere eine optische Kamera sein. In jedem Fall kann die Bilderfassungseinheit dazu ausgebildet sein, flächige Bilder im für den Menschen sichtbaren Spektrum des Lichts von zumindest einem Abschnitt des Nutzraums der Haushaltslagervorrichtung zu erfassen und z.B. einer Bildverarbeitungseinheit der Haushaltslagervorrichtung zur Verfügung zu stellen. Die Bilderfassungseinheit ist dabei dazu ausgebildet, statische Bilder oder dynamische Bilder bzw. Bildfolgen zu erfassen.

Die erfindungsgemäße Haushaltslagervorrichtung ist gekennzeichnet durch wenigstens eine ToF-Sensoreinheit, welche ausgebildet und angeordnet ist, eine flächige Abstandsinformation zu erfassen, wobei die Haushaltslagervorrichtung ausgebildet ist, wenigstens ein Objekt basierend auf den optisch erfassten Bilddaten der Bilderfassungseinheit und auf den flächigen Abstandsinformationen der ToF-Sensoreinheit zu bestimmen. Es können Objekte, welche in der Haushaltslagervorrichtung aufgenommen und gelagert werden können, nunmehr nicht nur durch eine alleinige optische Bilderfassung einer einzigen Bilderfassungseinheit bestimmt werden, sondern es können zusätzlich flächige Abstandsinformationen zur Bestimmung des Objekts herangezogen werden, welche mittels der ToF-Sensoreinheit erfasst werden können.

Unter einer ToF-Sensoreinheit (Time-of-Flight) wird ein ToF-Sensor bzw. eine ToF-Kamera verstanden. Eine ToF-Kamera ist dazu ausgebildet, mittels eines Laufzeitverfahrens Abstände bzw. Distanzen zu messen. Hierzu kann der Erfassungsbereich vor der ToF-Kamera mittels eines Lichtpulses ausgeleuchtet werden, welcher von der ToF-Kamera erzeugt werden kann. Die ToF-Kamera kann das reflektierte Licht erfassen und für jeden Bildpunkt die Zeit bestimmen, welche das Licht bis zu einem reflektierenden Objekt und wieder zurück zur ToF-Kamera benötigt hat. Diese Zeitspanne ist direkt proportional zur zurückgelegten Distanz, d.h. zum Abstand zwischen der ToF-Kamera und dem reflektierenden Objekt. Somit ist eine ToF-Kamera in der Lage, für jeden Bildpunkt die Entfernung zum reflektierenden Objekt zu bestimmen. Hieraus ergibt sich ein flächiges Abbild der Abstände zum reflektierenden Objekt.

Für die Anwendung einer erfindungsgemäßen Haushaltslagervorrichtung bedeutet dies, dass mittels der ToF-Sensoreinheit ein zweidimensionales Bild erfasst werden kann, welches z.B. durch eine Darstellung unterschiedlicher Grautöne bzw. Helligkeiten die Information der dritten Dimension, d.h. die Abstände in der Erfassungsrichtung der ToF-Sensoreinheit, darstellen kann. Wird nun ein Objekt wie z.B. ein Lebensmittel während seiner Lagerung im Nutzraum der Haushaltslagervorrichtung und bzw. oder während der Einlagerung bzw. während der Entnahme mittels der ToF-Sensoreinheit erfasst, so kann eine flächige Darstellung der Abstände zu dem Objekt zur Verfügung gestellt werden, aus der weitere Informationen des Objekts wie z.B. die Maße, die Kontur, das Volumen und dergleichen bestimmt werden können, wie weiter unten noch näher beschrieben werden wird.

Hierdurch kann erfindungsgemäß die Bestimmung eines Objekts, welches von der Haushaltslagervorrichtung gelagert bzw. in diese gestellt oder aus dieser entnommen wird, nunmehr nicht nur basierend auf den optisch erfassten Bilddaten der Bilderfassungseinheit erfolgen. Vielmehr kann diese Bestimmung basierend auf der Kombination der optisch erfassten Bilddaten der Bilderfassungseinheit sowie Informationen erfolgen, welche von der ToF-Sensoreinheit zusätzlich erfasst bzw. aus den Messdaten der ToF-Sensoreinheit gewonnen werden können. Hierbei kann eine Bestimmung des Objekts dahingehend basierend auf den optisch erfassten Bilddaten der Bilderfassungseinheit und den Daten der ToF-Sensoreinheit erfolgen, indem diese in einem gemeinsamen Schritt berücksichtigt werden und zu einem gemeinsamen Ergebnis führen. Alternativ kann auch ein Ergebnis, welches auf den optisch erfassten Bilddaten der Bilderfassungseinheit beruht, durch die Daten der ToF-Sensoreinheit überprüft und bestätigt oder verworfen werden.

Beispielsweise kann ein Objekt aufgrund der optisch erfassten Bilddaten der Bilderfassungseinheit sowohl als "rote Paprika" als auch als "Ketchupflasche" klassifiziert werden. Wird nun zusätzlich eine runde Kontur des Objekts aus den Informationen der ToF-Sensoreinheit erkannt, so kann die "rote Paprika" als solche erkannt und bestimmt werden.

Erfindungsgemäß kann somit die Wahrscheinlichkeit erhöht werden, dass ein Objekt zutreffend erkannt wird, indem die Abstandsinformationen bzw. geometrischen Informationen der ToF-Sensoreinheit zusätzlich zu den bekannten Bildinformationen verwendet werden, um das Objekt zu bestimmen bzw. dessen Bestimmung zu verifizieren. Dies kann die Erkennungsrate der Objekte erhöhen. Die Information der von der Haushaltslagervorrichtung gelagerten bzw. aus der Haushaltslagervorrichtung entnommenen Objekte kann somit eine höhere Verlässlichkeit aufweisen, was jeglicher Verwendung dieser Information zugutekommen kann. Insbesondere kann eine Bestands- bzw. Inventarliste der Haushaltslagervorrichtung eine höhere Genauigkeit und Zuverlässigkeit aufweisen, was den Nutzen für den Benutzer z.B. bei der Unterstützung beim Einkaufen sowie bei der Planung der Essenszubereitung erhöhen und auch die Akzeptanz des Benutzers dieser Informationen erhöhen kann.

Gemäß einem Aspekt der Erfindung weist die Haushaltslagervorrichtung wenigstens eine Bildverarbeitungseinheit auf, welche ausgebildet ist, aus den flächigen Abstandsinformationen der ToF-Sensoreinheit die Maße des Objekts zu bestimmen. Somit können die Höhe, die Breite und bzw. oder die Tiefe des Objekts als geometrische Angaben einzeln oder gemeinsam dazu verwendet werden, die Erkennung des Objekts zu verbessern.

Gemäß einem weiteren Aspekt der Erfindung weist die Haushaltslagervorrichtung wenigstens eine Bildverarbeitungseinheit auf, welche ausgebildet ist, aus den flächigen Abstandsinformationen der ToF-Sensoreinheit die Kontur des Objekts zu bestimmen. Somit können die Umrisse des Objekts dazu verwendet werden, die Erkennung des Objekts zu verbessern.

Gemäß einem weiteren Aspekt der Erfindung weist die Haushaltslagervorrichtung wenigstens eine Bildverarbeitungseinheit auf, welche ausgebildet ist, aus den flächigen Abstandsinformationen der ToF-Sensoreinheit das Volumen des Objekts zu bestimmen. Somit kann das Volumen des Objekts dazu verwendet werden, die Erkennung des Objekts zu verbessern.

Gemäß einem weiteren Aspekt der Erfindung ist die Bilderfassungseinheit ausgebildet und angeordnet, eine Mehrzahl der Lagerungselemente derart optisch zu erfassen, so dass die dort gelagerten Objekte zumindest abschnittsweise optisch erfasst werden können. Hierdurch kann die Bilderfassungseinheit besonders geeignet sein, statische Ansichten wenigstens eines Objekts zu erfassen, nachdem das Objekt im Nutzraum der Haushaltslagervorrichtung angeordnet wurde bzw. bevor das Objekt aus dem Nutzraum der Haushaltslagervorrichtung entnommen wird. Dies kann die Auswertung einer Momentaufnahme des Nutzraums ermöglichen bzw. begünstigen, um das Objekt bzw. alle dort gelagerten Objekte zu erfassen. Es kann eine statische Bilderfassung erfolgen, so dass die Nachteile einer dynamischen Bilderfassung vermieden werden können.

Gemäß einem weiteren Aspekt der Erfindung ist die Bilderfassungseinheit ausgebildet und angeordnet, wenigstens ein Objekt zumindest abschnittsweise optisch zu erfassen, wenn das Objekt dem Lagerungselement hinzugefügt oder dem Lagerungselement entnommen wird. Es kann mittels der Bilderfassungseinheit eine dynamische Bilderfassung erfolgen, so dass das Objekt in einer Bewegung zur Haushaltslagervorrichtung hin bzw. in diese hinein sowie in der umgekehrten Richtung optisch erfasst und bestimmt werden kann. Somit kann eine dynamische Bilderfassung erfolgen, so dass deren Vorteile genutzt werden können.

Gemäß einem weiteren Aspekt der Erfindung weist die Haushaltslagervorrichtung wenigstens eine Bildverarbeitungseinheit auf, welche ausgebildet ist, aus den flächigen Abstandsinformationen der ToF-Sensoreinheit eine Geschwindigkeit zu bestimmen, mit welcher das Objekt dem Lagerungselement hinzugefügt oder dem Lagerungselement entnommen wird. Diesem Aspekt der Erfindung liegt die Erkenntnis zugrunde, dass aus einer Veränderung des Abstands des Objekts zur ToF-Sensoreinheit unter Berücksichtigung der entsprechenden Zeitdifferenz auf die Geschwindigkeit des Objekts geschlossen werden kann. Somit kann mittels der ToF-Sensoreinheit die Geschwindigkeit des Objekts als zusätzliche Information gewonnen und dazu verwendet werden, um das Objekt zu bestimmen bzw. die Bestimmung des Objekts zu verbessern.

Wird beispielsweise ein Objekt, welches aufgrund optischer Daten als vergleichsweise groß bzw. großvolumig erkannt werden kann, vom Benutzer mit einer vergleichsweise schnellen Geschwindigkeit auf ein Lagerungselement der Haushaltslagervorrichtung gestellt, so kann hieraus geschlussfolgert werden, dass das Gewicht des Objekts vergleichsweise gering zu dessen Größe bzw. zu dessen Volumen sein kann. Umgekehrt kann aus einer vergleichsweise langsamen Bewegung geschlussfolgert werden, dass das Gewicht des Objekts vergleichsweise groß bzw. entsprechend zu dessen Größe bzw. zu dessen Volumen sein kann. Auch hierdurch können gewisse Lebensmittel bzw. Haushaltsmittel z.B. aufgrund von Widersprüchen der unterschiedlichen Informationen ausgeschlossen bzw. aufgrund von Übereinstimmungen der unterschiedlichen Informationen die Wahrscheinlichkeit erhöht werden, ein Objekt zutreffend bestimmt zu haben.

Gemäß einem weiteren Aspekt der Erfindung ist der Nutzraum mittels wenigstens eines Schließelements, vorzugsweise mittels wenigstens einer Tür, schließbar ausgebildet, wobei die ToF-Sensoreinheit an dem Schließelement dem Nutzraum zugewandt angeordnet ist. Hierdurch kann für die ToF-Sensoreinheit eine Ausrichtung auf die Lagerungselemente hin erfolgen, so dass die Abstandserfassung der dort aufgenommenen und gelagerten Objekte begünstigt werden kann.

Gemäß einem weiteren Aspekt der Erfindung ist die Haushaltslagervorrichtung ausgebildet, vorzugsweise einem Benutzer, eine Information des bestimmten Objekts zur Verfügung zu stellen. Somit kann ein Objekt wie zuvor beschrieben bestimmt und z.B. eine Bezeichnung eines Objekts wie z.B. "rote Paprika" zur Verfügung gestellt werden. Diese Information kann einem Benutzer z.B. angezeigt werden, um ihn über das gelagerte Objekt der Haushaltslagervorrichtung z.B. mittels eines Smartphones zu informieren. Diese Informationen können dabei vorzugsweise einem Benutzer, wie zuvor beschrieben, zur Verfügung gestellt werden aber auch z.B. einem Haushaltsgerät wie z.B. einem Kochfeld, um den Benutzer bei der Zubereitung von Speisen zu unterstützen, indem z.B. die aktuell verwendeten Lebensmittel angezeigt werden. Auch können diese Informationen einer zentralen Steuereinheit eines Haushalts und dergleichen zur Verfügung gestellt werden.

Gemäß einem weiteren Aspekt der Erfindung ist die Haushaltslagervorrichtung ausgebildet, vorzugsweise einem Benutzer, eine Information aller bestimmten Objekte zur Verfügung zu stellen, welche im Nutzraum gelagert sind. Hierdurch kann der Benutzer bei der Bevorratung, beim Einkauf sowie bei der Planung der Zubereitung von Speisen unterstützt werden. Insbesondere kann die Anzahl der identischen Objekte hierzu gezählt und angezeigt werden. Diese Informationen können dabei vorzugsweise einem Benutzer, wie zuvor beschrieben, zur Verfügung gestellt werden aber auch z.B. einem Haushaltsgerät wie z.B. einem Kochfeld, um dort den Bestand der Haushaltslagervorrichtung bei der Planung bzw. bei der Zubereitung von Speisen berücksichtigen zu können. Auch können diese Informationen einer zentralen Steuereinheit eines Haushalts und dergleichen zur Verfügung gestellt werden.

Die vorliegende Erfindung betrifft auch ein Objekterkennungssystem für eine Haushaltslagervorrichtung wie zuvor beschrieben mit wenigstens einer ersten Bilderfassungseinheit, welche ausgebildet ist, einen Nutzraum der Haushaltslagervorrichtung zumindest abschnittsweise optisch zu erfassen, und mit wenigstens einer ToF-Sensoreinheit, welche ausgebildet ist, eine flächige Abstandsinformation zu erfassen, wobei das Objekterkennungssystem ausgebildet ist, wenigstens ein Objekt basierend auf den optisch erfassten Bilddaten der Bilderfassungseinheit und auf den flächigen Abstandsinformationen der ToF-Sensoreinheit zu bestimmen. Auf diese Art und Weise kann ein Objekterkennungssystem zur Verfügung gestellt werden, um eine erfindungsgemäße Haushaltslagervorrichtung umsetzen und deren Eigenschaften und Vorteile nutzen zu können. Insbesondere kann hierdurch die Möglichkeit geschaffen werden, eine vorhandene und bekannte Haushaltslagervorrichtung mit einem erfindungsgemäßen Objekterkennungssystem auszurüsten und so zu einer erfindungsgemäßen Haushaltslagervorrichtung zu machen.

Die zuvor beschriebenen Aspekte der erfindungsgemäßen Haushaltslagervorrichtung, welche die Informationen über den Inhalt der Haushaltslagervorrichtung betreffen, können dabei auch seitens des Objekterkennungssystems umgesetzt werden. Insbesondere können mehrere bestimmte Objekte und insbesondere alle bestimmten Objekte, welche von der Haushaltsvorratsvorrichtung aktuell aufgenommen werden sowie ggfs. deren Historie, auch von dem Objekterkennungssystem gespeichert und, insbesondere einem Benutzer, zur Verfügung gestellt werden, wie zuvor hinsichtlich der erfindungsgemäßen Haushaltsvorratsvorrichtung beschrieben.

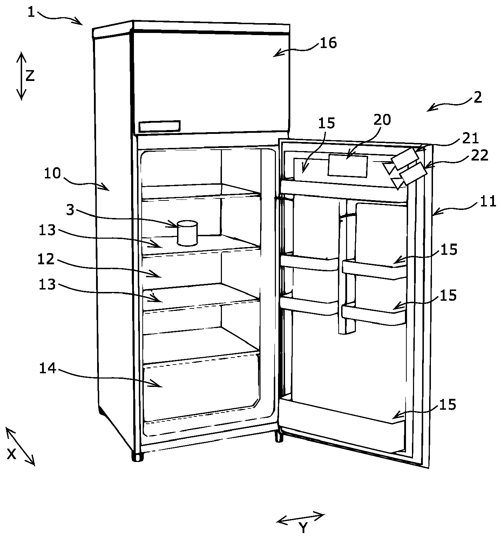

Ein Ausführungsbeispiel der Erfindung ist in der Zeichnung rein schematisch dargestellt und wird nachfolgend näher beschrieben. Es zeigt
- Figur 1: eine perspektivische schematische Darstellung eines Kühlschranks als Beispiel einer erfindungsgemäßen Haushaltslagervorrichtung.

Die o.g. Figuren werden in kartesischen Koordinaten betrachtet. Es erstreckt sich eine Längsrichtung X, welche auch als Tiefe X oder als Länge X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann.

Figur 1 zeigt eine erfindungsgemäße Haushaltslagervorrichtung 1, welche beispielhaft als Kühlgerät 1 bzw. als Haushaltskühlgerät 1 in Form eines Kühlschranks 1 ausgeführt ist. Die erfindungsgemäße Haushaltslagervorrichtung 1 kann jedoch auch ein offenes oder ein mit wenigstens einer Tür schließbares Lagerregal, Vorratsregal und dergleichen sowie ein offener oder mit Türen schließbarer Lagerschrank, Vorratsschrank und dergleichen sein, welcher in einem Lagerraum, in einem Vorratsraum, in einer Speisekammer, in einem Vorratskeller und dergleichen zur Lagerung von Lebensmittels und bzw. oder Haushaltsmitteln verwendet werden kann. Die erfindungsgemäße Haushaltslagervorrichtung 1 kann ebenso ein offener oder ein mit wenigstens einer Tür verschließbarer Küchenschrank sowie eine Küchenzeile bzw. ein Element einer Küchenzeile sein, welches zur Lagerung von Lebensmittels und bzw. oder Haushaltsmitteln verwendet werden kann. Die erfindungsgemäße Haushaltslagervorrichtung 1 kann ferner ein mit wenigstens einer Tür verschließbarer Weinklimaschrank bzw. ein mit wenigstens einer Tür verschließbarer Weintemperierschrank sein. Als Haushaltskühlgerät 1 kann die erfindungsgemäße Haushaltslagervorrichtung 1 auch ein sonstiges Kühlgerät wie z.B. eine Kühltruhe oder auch ein Gefriergerät wie z.B. ein Gefrierschrank oder eine Gefriertruhe sein. In jedem Fall kann eine erfindungsgemäße Haushaltslagervorrichtung 1 eine jegliche Lagervorrichtung für Lebensmittel und bzw. oder Haushaltswaren sein, welche in einem privaten Haushalten sowie z.B. in der Gastronomie und in Hotels verwendet werden kann.

Der Kühlschrank 1 weist ein quaderförmiges Gehäuse 10 auf, welches einen Innenraum 12 als Nutzraum 12 umgibt und mittels eines Schließelements 11 in Form einer Tür 11 geöffnet und geschlossen werden kann, um den Innenraum 12 einem Benutzer zugänglich zu machen bzw. um den Innenraum 12 zu verschließen. Innerhalb des Innenraums 12 sind mehrere Böden 13 horizontal angeordnet, um auf sich drauf Lebensmittel und dergleichen aufzunehmen. Im unteren Bereich des Innenraums 12 ist eine Schublade 14 angeordnet, welche in der Tiefe X vom Benutzer hervor- bzw. herausgezogen bzw. in der entgegengesetzten Richtung in den Innenraum 12 eingeschoben werden kann. Auch hier können z.B. Lebensmittel z.B. in Form von Obst, Gemüse und dergleichen aufbewahrt werden. Ferner weist die Tür 11 an ihrer dem Innenraum 12 zugewandten Innenseite mehrere Türfächer 15 auf, in welche insbesondere Flaschen, Tetrapacks und dergleichen angeordnet werden können. Die Böden 13, die Schublade 14 sowie die Türfächer 15 bilden Lagerungselemente 13, 14, 15 des Kühlschranks 1, welche sich bei geschlossener Tür 11 alle im Nutzraum 12 bzw. im Innenraum 12 des Kühlschranks 1 befinden.

Oberhalb des Innenraums 12 weist der Kühlschrank 1 noch eine Gefriereinheit 16 auf, welche ebenfalls mit einer separaten Tür (nicht bezeichnet) schließbar ist. Dort können gefrorene Lebensmittel aufgenommen werden, was hier jedoch nicht näher betrachtet werden soll.

Der Kühlschrank 1 ist mit einem erfindungsgemäßen Objekterkennungssystem 2 ausgerüstet, welches eine Bilderfassungseinheit 21 in Form einer optischen Kamera 21 und eine ToF-Sensoreinheit 22 in Form einer ToF-Kamera 22 aufweist, welche beide signalübertragend mit einer Bildverarbeitungseinheit 20 verbunden sind. Die optische Kamera 21 ist an der oben äußeren Ecke der Innenseite der Tür 11 derart angeordnet und ausgerichtet, so dass die optische Kamera 21 den Bereich vor dem Nutzraum 12 sowie den Nutzraum 12 selbst optisch erfassen kann, wenn die Tür 11 geöffnet ist. Hierdurch kann eine optische Erfassung des Nutzraums 12 mit dessen Lagerelementen 13, 14, 15 erfolgen, um wenigstens ein Objekt 3 als Produkt 3 zu erfassen, welches in diesem Fall ein Lebensmittel 3 ist. Das Lebensmittel 3 kann dabei z.B. ein loses Lebensmittel 3 wie z.B. ein Stück Obst oder Gemüse wie z.B. eine Banane sein, aber auch ein verpacktes Lebensmittel wie z.B. ein Joghurtbecher oder ein Lebensmittel wie z.B. Wurstscheiben, welche sich innerhalb einer Frischhaltedose oder dergleichen befinden.

Die ToF-Kamera 22 ist in der Höhe Z etwas unterhalb der optischen Kamera 21 angeordnet und vergleichbar zum Nutzraum 12 hin ausgerichtet, um ebenfalls den Bereich vor dem Nutzraum 12 sowie den Nutzraum 12 selbst erfassen zu können, wenn die Tür 11 geöffnet ist. Mittels der ToF-Kamera 22 können somit zusätzliche Abstandsinformationen über den Nutzraum 12 samt der dort gelagerten Lebensmittel 3 erfasst werden, welche seitens der Bildverarbeitungseinheit 20 in geometrische Informationen der Lebensmittel 3 wie z.B. Maße, Kontur und Volumen gewandelt werden können. Diese zusätzlichen Informationen können zur Bestimmung der Lebensmittel 3 verwendet werden. Auch kann basierend auf dieser zusätzlichen Information ein vermeintlich erkanntes Lebensmittel 3 auf Plausibilität überprüft werden.

Durch die Kombination der optischen Kamera 21 mit der ToF-Kamera 22 können optische Informationen sowie Abstandsinformationen über das Lebensmittel 3 gewonnen werden, welche die Bestimmung, Erkennung bzw. Identifikation des Lebensmittels 3 erleichtern bzw. eine Plausibilitätsprüfung einer derartigen Bestimmung ermöglichen können. In dem Fall kann die Genauigkeit der Bestimmung von Lebensmitteln 3 erhöht werden, was den Nutzen für den Benutzer erhöhen und insbesondere die Akzeptanz eines derartigen erfindungsgemäßen Kühlschranks 1 bzw. eines derartigen erfindungsgemäßen Objekterkennungssystems 2 erhöhen kann. Es kann die Erkennungsrate der Lebensmittel 3 erhöht werden, ohne dass ein Benutzer sein Verhalten z.B. hinsichtlich der Geschwindigkeit, mit der ein Lebensmittel 3 aus dem Nutzraum 12 des Kühlschranks 1 entnommen wird, ändern muss. Auch kann die optische Kamera 21 sowie die im Nutzraum 12 vorhandene Beleuchtung (nicht dargestellt) des Kühlschranks 1 unverändert verwendet werden.

### Bezugszeichenliste (Bestandteil der Beschreibung)

- X: Längsrichtung; Tiefe; Länge
- Y: Querrichtung; Breite
- Z: vertikale Richtung; Höhe

- 1: Haushaltslagervorrichtung; Kühlgerät; Haushaltskühlgerät; Kühlschrank
- 10: Gehäuse
- 11: Schließelement; Tür
- 12: Nutzraum; Innenraum
- 13: Lagerungselemente; Böden
- 14: Lagerungselement; Schublade
- 15: Lagerungselemente; Türfächer
- 16: Gefriereinheit

- 2: Objekterkennungssystem
- 20: Bildverarbeitungseinheit
- 21: Bilderfassungseinheit; optische Kamera
- 22: ToF-Sensoreinheit; ToF-Kamera

- 3: Objekt; Produkt; Lebensmittel; Haushaltsmittel

## Patentansprüche

1. Haushaltslagervorrichtung (1)
mit einem Nutzraum (12) mit wenigstens einem Lagerungselement (13; 14; 15), vorzugsweise mit einer Mehrzahl von Lagerungselementen (13, 14, 15), welches zur Aufnahme und zur Lagerung wenigstens eines Objekts (3), vorzugsweise wenigstens eines Lebensmittels (3) und/oder wenigstens eines Haushaltsmittels (3), ausgebildet ist, und
mit wenigstens einer Bilderfassungseinheit (21), welche ausgebildet und angeordnet ist, den Nutzraum (12) zumindest abschnittsweise optisch zu erfassen,
**gekennzeichnet durch**
wenigstens eine ToF-Sensoreinheit (22), welche ausgebildet und angeordnet ist, eine flächige Abstandsinformation zu erfassen,
wobei die Haushaltslagervorrichtung (1) ausgebildet ist, wenigstens ein Objekt (3) basierend auf den optisch erfassten Bilddaten der Bilderfassungseinheit (21) und auf den flächigen Abstandsinformationen der ToF-Sensoreinheit (22) zu bestimmen.

2. Haushaltslagervorrichtung (1) nach Anspruch 1, **gekennzeichnet durch**
wenigstens eine Bildverarbeitungseinheit (20), welche ausgebildet ist, aus den flächigen Abstandsinformationen der ToF-Sensoreinheit (22) die Maße des Objekts (3) zu bestimmen.

3. Haushaltslagervorrichtung (1) nach Anspruch 1 oder 2, **gekennzeichnet durch**
wenigstens eine Bildverarbeitungseinheit (20), welche ausgebildet ist, aus den flächigen Abstandsinformationen der ToF-Sensoreinheit (22) die Kontur des Objekts (3) zu bestimmen.

4. Haushaltslagervorrichtung (1) nach einem der vorangehenden Ansprüche, **gekennzeichnet durch**
wenigstens eine Bildverarbeitungseinheit (20), welche ausgebildet ist, aus den flächigen Abstandsinformationen der ToF-Sensoreinheit (22) das Volumen des Objekts (3) zu bestimmen.

5. Haushaltslagervorrichtung (1) nach einem der vorangehenden Ansprüche, **dadurch gekennzeichnet, dass**
die Bilderfassungseinheit (21) ausgebildet und angeordnet ist, eine Mehrzahl der Lagerungselemente (13, 14, 15) derart optisch zu erfassen, so dass die dort gelagerten Objekte (3) zumindest abschnittsweise optisch erfasst werden können.

6. Haushaltslagervorrichtung (1) nach einem der vorangehenden Ansprüche, **dadurch gekennzeichnet, dass**
die Bilderfassungseinheit (21) ausgebildet und angeordnet ist, wenigstens ein Objekt (3) zumindest abschnittsweise optisch zu erfassen, wenn das Objekt (3) dem Lagerungselement (13, 14, 15) hinzugefügt oder dem Lagerungselement (13, 14, 15) entnommen wird.

7. Haushaltslagervorrichtung (1) nach einem der vorangehenden Ansprüche, **gekennzeichnet durch**
wenigstens eine Bildverarbeitungseinheit (20), welche ausgebildet ist, aus den flächigen Abstandsinformationen der ToF-Sensoreinheit (22) eine Geschwindigkeit des Objekts (3) zu bestimmen, mit welcher das Objekt (3) dem Lagerungselement (13, 14, 15) hinzugefügt oder dem Lagerungselement (13, 14, 15) entnommen wird.

8. Haushaltslagervorrichtung (1) nach einem der vorangehenden Ansprüche, **dadurch gekennzeichnet, dass**
der Nutzraum (12) mittels wenigstens eines Schließelements (11), vorzugsweise mittels wenigstens einer Tür (11), schließbar ausgebildet ist,
wobei die ToF-Sensoreinheit (22) an dem Schließelement (11) dem Nutzraum (12) zugewandt angeordnet ist.

9. Haushaltslagervorrichtung (1) nach einem der vorangehenden Ansprüche, **dadurch gekennzeichnet, dass**
die Haushaltslagervorrichtung (1) ausgebildet ist, vorzugsweise einem Benutzer, eine Information des bestimmten Objekts (3) zur Verfügung zu stellen.

10. Haushaltslagervorrichtung (1) nach einem der vorangehenden Ansprüche, **dadurch gekennzeichnet, dass**
die Haushaltslagervorrichtung (1) ausgebildet ist, vorzugsweise einem Benutzer, eine Information aller bestimmten Objekte (3) zur Verfügung zu stellen, welche im Nutzraum (12) gelagert sind.

11. Objekterkennungssystem (2) für eine Haushaltslagervorrichtung (1) nach einem der vorangehenden Ansprüche
mit wenigstens einer Bilderfassungseinheit (21), welche ausgebildet ist, einen Nutzraum (12) der Haushaltslagervorrichtung (1) zumindest abschnittsweise optisch zu erfassen, und
mit wenigstens einer ToF-Sensoreinheit (22), welche ausgebildet ist, eine flächige Abstandsinformation zu erfassen,
wobei das Objekterkennungssystem (2) ausgebildet ist, wenigstens ein Objekt (3) basierend auf den optisch erfassten Bilddaten der Bilderfassungseinheit (21) und auf den flächigen Abstandsinformationen der ToF-Sensoreinheit (22) zu bestimmen.
